# EUROPEAN PATENT APPLICATION

(11) **EP 1 187 423 A2**
(43) Date of publication of application: **13.03.2002**
(21) Application number: 01307783.9
(22) Date of filing: 12.09.2001
(51) Int. Cl.: H04L 29/06, H04H 1/00, H04N 7/24

(54) **Streaming information providing method**

(30) Priority: 12.09.2000 JP 2000281738
(71) Applicant: Sony Corporation, Tokyo 141-0001 (JP)
(72) Inventor: Watanabe, Koichiro, c/o Sony Corporation, Shinagawa-Ku, Tokyo 141 (JP)
(74) Representative: Turner, James Arthur

(57) **Abstract**

An information providing method distributes in advance a playback file upon downloading which is to be played in a period between the start of downloading files and the start of playing the files. Also, a piece of streaming content is distributed by switching a distribution method between streaming distribution and buffering distribution. Furthermore, a piece of streaming content is distributed by switching the distribution method between streaming distribution using unicast communication and buffering distribution using multicast communication.

## Description

The present invention relates to information providing methods which can be applied to, for example, distributing music and video over the Internet.

Hitherto, information whose contents vary with time (hereinafter referred to as streaming content), such as music and video, has been distributed over the Internet using a file format such as WAV or MOV. When a user wants to use files of such streaming content, a user's terminal gains access to a server that distributes such content and starts downloading desired files. Subsequently, the user waits for completion of downloading and performs processing such as playing the files.

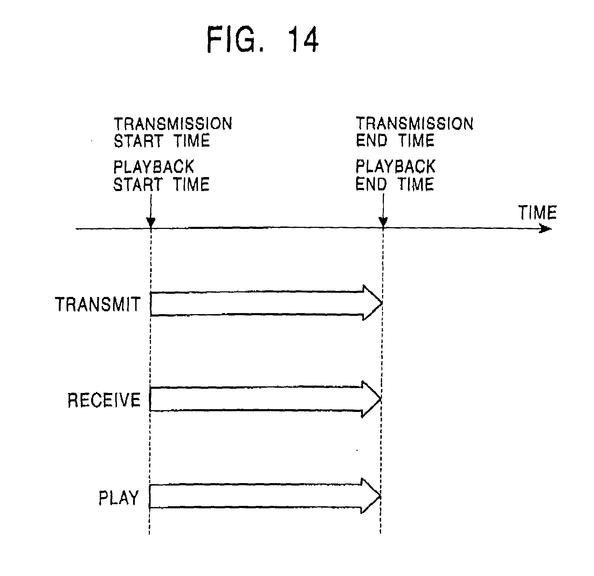

Distribution of streaming content on demand selectively uses two distribution methods. A first distribution method is a method for distributing streaming content using a file format in which a data receiving side is allowed to play the streaming content to be downloaded while receiving it (hereinafter this distribution method is referred to as streaming distribution, and transmission and playing of streaming content using this streaming distribution method are referred to as streaming transmission and streaming playback, respectively). For distribution on demand, streaming distribution is performed by unicast communication. Specifically, as shown in Fig. 14, streaming distribution requires approximately the same amount of time for transmission, reception, and playing of a single piece of streaming content. A player side can monitor downloaded content immediately after the start of downloading the content.

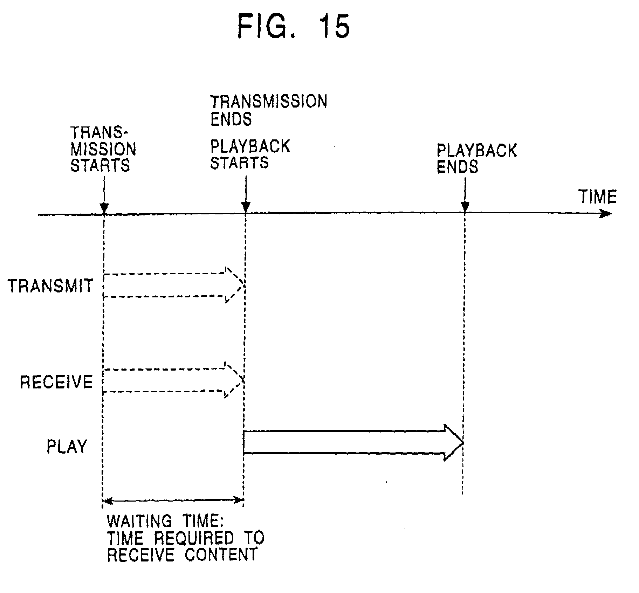

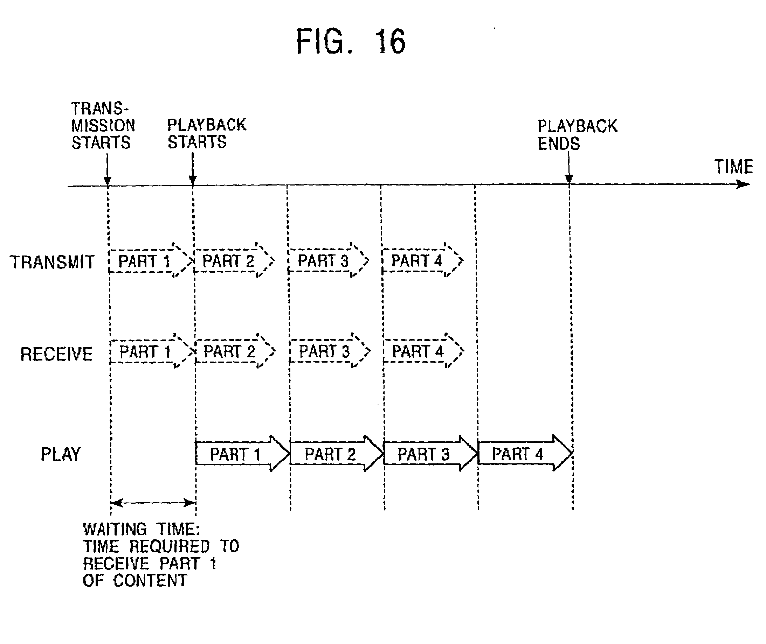

A second distribution method is a method for distributing streaming content using, for example, WAV or MOV format (hereinafter this distribution method is referred to as buffering distribution, and transmission and playing of streaming content using this buffering distribution method are referred to as buffering transmission and buffering playback, respectively). For distribution on demand, buffering distribution is performed by multicast communication. In the second distribution method, a receiving side temporarily stores files of downloaded streaming content in a storage device such as a hard disk and plays the files recorded in the storage medium after downloading is completed. As shown in Fig. 15, the second distribution method is disadvantageous in that it requires waiting time from the start of downloading to the start of monitoring the content. However, the second distribution method has advantages over streaming playback in that error correction and encryption can be performed in a simpler manner. Accordingly, the second distribution method can reliably distribute streaming content. More specifically, as shown in Fig. 16, buffering distribution divides a single piece of streaming content into a plurality of files and sequentially transmits the files, and hence the waiting time is reduced. In other words, a single piece of streaming content is divided into files of parts 1 to 4, and the files are sequentially transmitted. At a point at which the receiving side downloads the file of part 1, the receiving side can start playing part 1. As a result, the waiting time is reduced. While each part is being played, downloading of parts subsequent to part 1 is completed. Thus, the successive parts can be played continuously. Nevertheless, even buffering distribution cannot avoid the generation of waiting time before the playback of files starts.

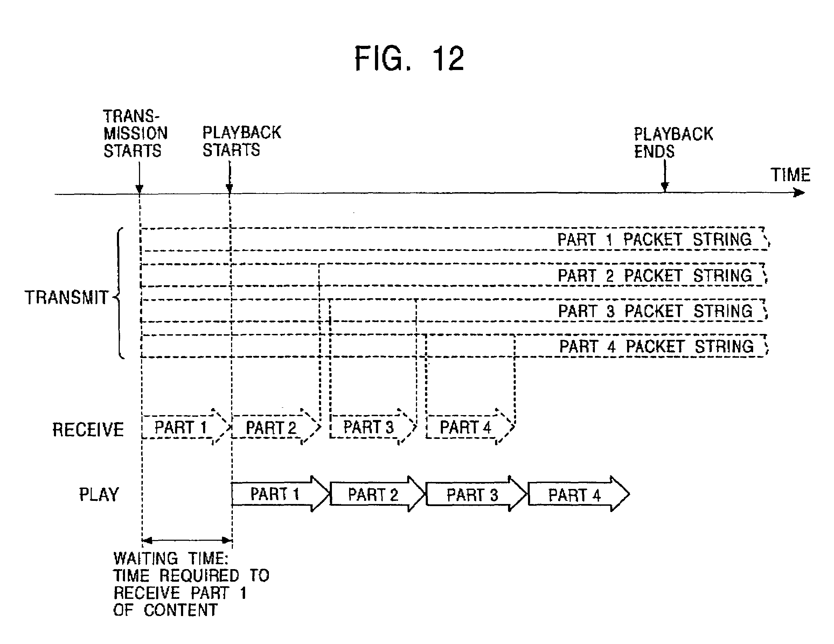

According to this principle, buffering distribution by multicast communication implements distribution on demand by performing multicast communication for each part. For example, as shown in Fig. 12, each part is assigned to fifty packets indicated by numerals one to fifty. The fifty packets are sequentially and cyclically transmitted. Based on the packets which are sequentially and cyclically transmitted, the receiving side can selectively receive the fifty packets forming a single part, thereby playing that part.

Although multicast communication in buffering distribution requires more bandwidth than unicast communication in streaming distribution, distribution destinations are not limited by bandwidth in multicast communication in buffering distribution. Multicast communication in buffering distribution can distribute streaming content to many distribution destinations in a more efficient manner than unicast communication in streaming distribution.

Since it is necessary to download files of streaming content before playing, it takes a long waiting time before playback starts.

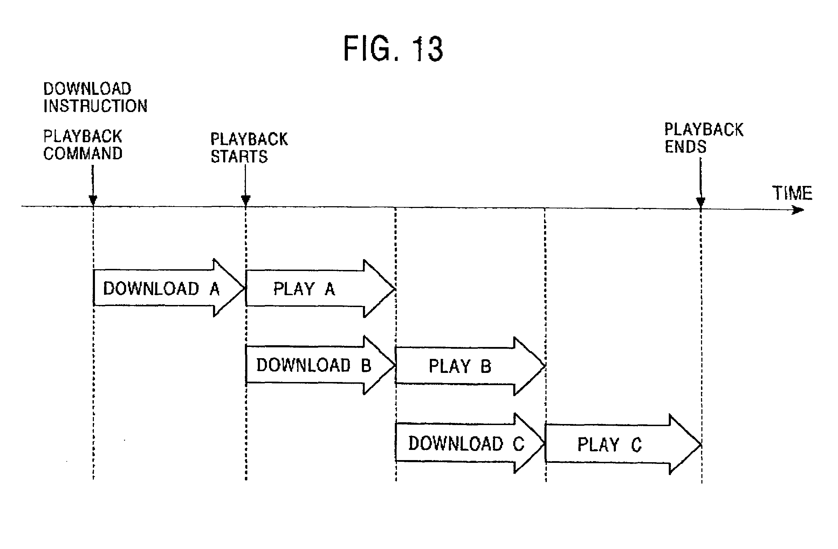

One method for solving this problem is dividing streaming content such as a movie whose playback time is long into a plurality of files and providing the files. In other words, as shown in Fig. 13, for example, desired streaming content is divided in units of 15 minutes, and three files A, B, and C are thereby created. In response to access by the user, the three files are sequentially provided in time series. In this case, for example, in response to a playback instruction, a terminal such as a personal computer gains access to a content server and starts downloading the file A. When the downloading of the file A is completed, the terminal starts playing the streaming content and provides the content to the user. While the file A is being played, the terminal downloads the subsequent file B. When the playback of the file A is completed, the terminal plays the file B which is downloaded while the file A is being played. While the file B is being played, the terminal downloads the subsequent file C. When the playback of the file B is completed, the terminal plays the file C which is downloaded while the file B is being played. In this manner, when streaming content in a file format such as WAV or MOV is distributed, the waiting time before playback can be reduced. Nevertheless, even when the waiting time is reduced, the user is required to wait for playback to start in a period between the start of downloading and the start of playback. This places the burden on the user.

Although buffering distribution is advantageous in that it can reliably distribute streaming content, one disadvantage of buffering distribution is that it requires waiting time from the start of downloading to the start of monitoring. Referring to Fig. 16, buffering distribution divides a single piece of streaming content into a plurality of files and sequentially transmits the files, thereby reducing the waiting time. Specifically in this case, parts 1 to 4, which are obtained by dividing a single piece of streaming content, are successively distributed. At the receiving side, playback of part 1 can start when the file of part 1 is downloaded, and hence the waiting time is reduced. While each part is being played, downloading of the subsequent parts is completed. Thus, the successive parts can be played continuously. Nevertheless, buffering distribution cannot avoid the generation of waiting time. In contrast, although streaming distribution has disadvantages in terms of reliability compared with buffering distribution, the streaming distribution is advantageous in that it requires almost no waiting time. Since buffering distribution is assumed to employ unicast communication, buffering distribution is disadvantageous in that it is restricted by the capacity of a transmission channel in the number of distribution destinations. In contrast, multicast communication can be easily performed in streaming distribution. Multicast communication is characterized in that it is not restricted by the capacity of a transmission channel in the number of distribution destinations. If streaming content is distributed using a system which combines the advantages of streaming distribution and buffering distribution, it is understood that the usability of this type of distribution system is further improved.

When the number of distribution destinations is large, multicast communication in buffering distribution can efficiently distribute content. However, when the number of distribution destinations is small, the efficiency declines. As described above with reference to Fig. 16, although multicast communication in buffering distribution can reduce the waiting time from the start of downloading to the start of monitoring, multicast communication requires waiting time. If streaming content is distributed using a system which combines the advantages of streaming distribution by unicast communication and buffering distribution by multicast communication, it is understood that the usability of this type of distribution system is further improved.

Various respective aspects and features of the invention are defined in the appended claims. Features from the dependent claims may be combined with features of the independent claims as appropriate and not merely as explicitly set out in the claims.

A first information providing method of the present invention distributes in advance a playback file upon downloading, which is to be distributed in a period between the start of downloading files and the start of playing the files, thereby lessening the burden on a user in the period between the start of downloading the files and the start of playing the files.

A second information providing method of the present invention distributes a single piece of streaming content by switching a distribution method between a streaming distribution method and a buffering distribution method. The streaming content can be distributed by the second information providing method which has advantages of both streaming distribution and buffering distribution.

A third information providing method distributes a single piece of streaming content by switching a distribution method between streaming distribution by unicast communication and buffering distribution by multicast communication. The streaming content can be distributed by the third information providing method which has advantages of both streaming distribution by unicast communication and buffering distribution by multicast communication.

In view of the foregoing problems, embodiments of the present invention can provide an information providing method capable of lessening the burden on a user in a period between the start of downloading files and the start of playing the files. Embodiments of the present invention can provide an information providing method capable of distributing streaming content using a system that has advantages of both streaming distribution and buffering distribution. Embodiments of the present invention can provide an information providing method for distributing streaming content using a system that has advantages of both streaming distribution by unicast communication and buffering distribution by multicast communication.

In order to solve or at least alleviate the foregoing problems, according to an aspect of the present invention, an information providing method is provided including the step of providing in advance a playback file upon downloading, which is to be played in a period between the start of downloading streaming content files and the start of playing the files, to an information terminal by downloading the playback file.

When a playback file upon downloading, which is to be played in a period between the start of downloading streaming content files and the start of playing the files, is provided in advance to an information terminal, the burden on a user can be lessened by selecting the playback file upon downloading in the period between the start of downloading the streaming content files and the start of playing the files. In other words, when a first file from among a plurality of files created by dividing a piece of streaming content into a plurality of blocks is used as a playback file upon downloading, the playback file upon downloading can be played at the time the downloading of the remaining files starts. Thus, the streaming content is processed without making the user aware of the downloading operation. In this case, there is no waiting time for the user, and the burden on the user is lessened. When a file of streaming content that introduces the above-described streaming content to be downloaded is used as a playback file upon downloading, the playback file upon downloading can ease the user's frustration in a period between the start of downloading files and the start of playing the downloaded files, thereby easing the user's frustration and reducing the burden on the user. Also, it is possible to drive the user to buy other content.

According to another aspect of the present invention, an information providing method for providing streaming content to a predetermined information terminal by downloading the streaming content is provided. By switching a distribution method between streaming distribution and buffering distribution, a piece of streaming content is distributed. According to the present invention, the distribution method is switched between streaming distribution and buffering distribution, and hence a piece of streaming content is distributed. Accordingly, the content can be distributed by a system which has advantages of both distribution methods in which the distribution method is switched between streaming distribution and buffering distribution so as to achieve advantages of both distribution methods.

According to another aspect of the present invention, an information providing method for providing streaming content to a predetermined information terminal by downloading the streaming content is provided. A piece of streaming content is distributed by switching a distribution method between streaming distribution using unicast communication and buffering distribution using multicast communication. Since a piece of streaming content is distributed by switching the distribution method between streaming distribution using unicast communication and buffering distribution using multicast communication, the content can be distributed by a system which has advantages of both distribution methods in which the distribution method is switched between streaming distribution using unicast communication and buffering distribution using multicast communication so as to achieve advantages of both distribution methods.

The invention will now be described by way of example with reference to the accompanying drawings, throughout which like parts are referred to by like references, and in which:
Fig. 1 is a time chart showing processing of content performed by a distribution system according to a first embodiment of the present invention;
Fig. 2 is a block diagram showing the distribution system illustrated in Fig. 1;
Fig. 3 is a time chart showing processing of content performed by a distribution system according to a second embodiment of the present invention;
Fig. 4 is a time chart showing switching from streaming distribution to buffering distribution in a distribution system according to a third embodiment of the present invention;
Fig. 5 is a block diagram showing the distribution system shown in Fig. 4;
Fig. 6 is a time chart showing switching of three-system distribution from streaming distribution to buffering distribution;
Fig. 7 is a time chart showing switching from buffering distribution to streaming distribution;
Fig. 8 is a time chart showing switching from streaming distribution by unicast communication to buffering distribution by multicast communication in the distribution system shown in Fig. 5;
Fig. 9 is a time chart showing switching of three-system distribution from streaming distribution by unicast communication to buffering distribution by multicast communication;
Fig. 10 is a time chart showing switching from buffering distribution by multicast transmission to streaming distribution by unicast transmission;
Fig. 11 is a time chart showing a packet string provided for buffering distribution by multicast communication;
Fig. 12 is a time chart showing buffering distribution by multicast communication;
Fig. 13 is a time chart showing buffering distribution of a single file which is divided into three files;
Fig. 14 is a time chart showing streaming distribution;
Fig. 15 is a time chart showing buffering distribution; and
Fig. 16 is a time chart showing buffering distribution of a single piece of streaming content which is divided into a plurality of files.

The embodiments of the present invention will be described with reference to the drawings.

### A-1 First Embodiment

### 1-1 Structure of First Embodiment

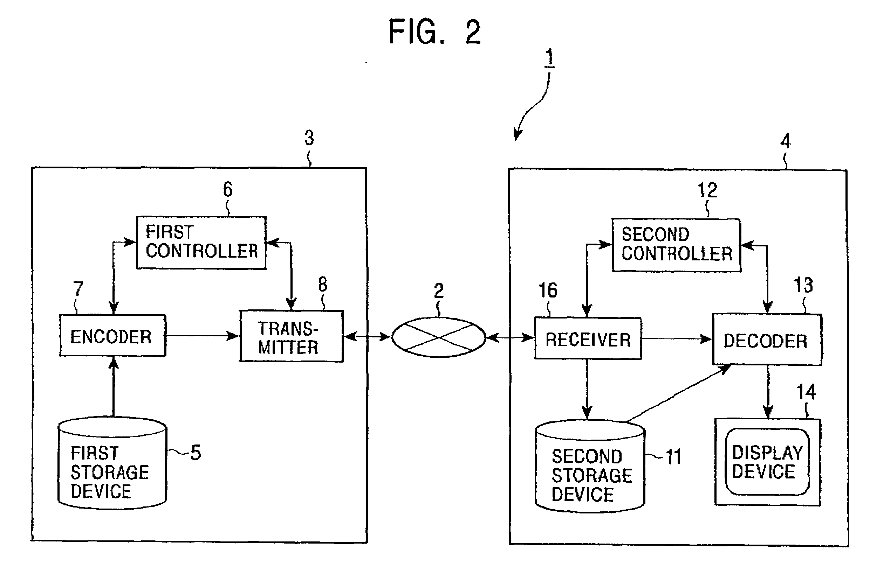

Fig. 2 is a block diagram showing a distribution system according to a first embodiment of the present invention. In a distribution system 1, streaming content including video taken from a movie is distributed by a transmitting apparatus 3 in response to access by a receiving apparatus 4 connected to the transmitting apparatus 3 over the Internet 2. The transmitting apparatus 3 forms a content server. The transmitting apparatus 3 stores various streaming content to be distributed in a first storage device 5.

More specifically, the first storage device 5 is a large-capacity hard disk and stores various streaming content and information required for distribution processing. Under the control of a first controller 6, the first storage device 5 updates the maintained streaming content and outputs the streaming content which is recorded as described above to the receiving apparatus 4 through an encoder 7. At this time, under the control of the first controller 6, the first storage device 5 divides the streaming content into consecutive 15-minute sections and outputs the sections. Accordingly, the transmitting apparatus 3 is designed to transmit the streaming content using a plurality of files to the receiving apparatus 4.

Since the streaming content is divided into a plurality of files and the files are transmitted in this embodiment, a first file of the streaming content is set as a playback file upon downloading, and the playback file upon downloading is transmitted in advance to the receiving apparatus 4. Data required for distribution processing include the address of each receiving apparatus 4 or the like. The playback file upon downloading is a file assigned to be played by the receiving apparatus 4 in a period between the start of downloading the files of the streaming content and the start of playing the files.

The encoder 7 compresses the streaming content data output from the first storage device 5 using, for example, the MPEG 2 technique. Also, the encoder 7 converts each section of the compressed data into a file using MOV or AVI which is a file format other than streaming and outputs the files.

A transmitter 8 is a network interface. The transmitter 8 reports access by the receiving apparatus 4 to the first controller 6. Also, the transmitter 8 transmits various data output by the first controller 6 in response to this report and the files of the streaming content output by the encoder 7 to the receiving apparatus 4.

The first controller 6 is an arithmetic processing unit for controlling the operation of the transmitting apparatus 3. In response to an instruction given by an operator, the first controller 6 periodically updates the streaming content stored in the first storage device 5. When the streaming content is updated in this manner, the first controller 6 controls the overall operation so that a playback file upon downloading for the streaming content newly stored in the first storage device 5 is transmitted to each receiving apparatus 4. Accordingly, for streaming content that can be downloaded by the receiving apparatus 4, the transmitting apparatus 3 transmits in advance a first file from among files to be transmitted to each receiving apparatus 4.

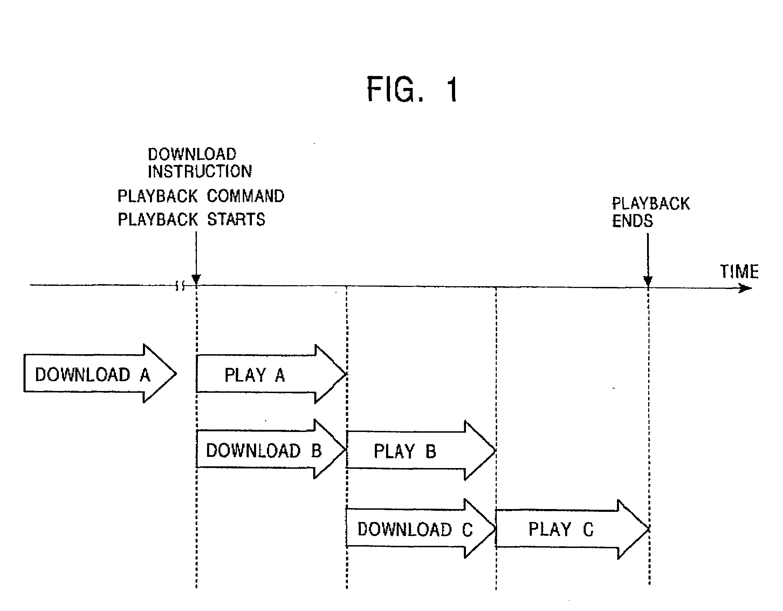

When a download request for downloading streaming content desired by the user is reported upon access by the receiving apparatus 4, as shown in Fig. 1, the first controller 6 transmits the file B which is subsequent to the first file distributed in advance to the receiving apparatus 4. When transmission of the file B is completed, the first controller 6 controls the overall operation so that the subsequent file C is transmitted.

If the receiving apparatus 4 gains access for the first time, the first controller 6 obtains an address from the receiving apparatus 4 by initialization by the receiving apparatus 4 and stores the address in the first storage device 5. Upon this access, or at a predetermined time after this access, the first controller 6 controls the overall operation so that playback files upon downloading for all pieces of streaming content stored in the first storage device 5 are transmitted to the receiving apparatus 4. Accordingly, the distribution system 1 is designed so that a first file of downloadable streaming content is distributed in advance to all the receiving apparatuses 4.

The receiving apparatus 4 is formed by, for example, a personal computer or a dedicated terminal for music distribution. The receiving apparatus 4 downloads files of streaming content from the transmitting apparatus 3 and plays the files in response to an operation input by an operator.

A second storage device 11 in the receiving apparatus 4 is formed by a hard disk. The second storage device 11 records various information required for downloading information from the receiving apparatus 3, a playback file upon downloading which is distributed by the transmitting apparatus 3, downloaded files of streaming content, and the like. Furthermore, the second storage device 11 under the control of a second controller 12 outputs the recorded files to a decoder 13. The decoder 13 decodes the files output by the second storage device 11 and outputs the decoded files. A display device 14 formed by a liquid crystal display displays video data output by the decoder 13. The receiving apparatus 4 is designed to monitor audio data from among the data output from the decoder 13 using an audio processing system (not shown).

A receiver 16 is a network interface. The receiver 16 reports access by the transmitting apparatus 3 to the second controller 12 and conveys output data from the second controller 12 to the transmitter 8. The receiver 16 outputs various files transmitted by the transmitting apparatus 3 to the second storage device 11.

The second controller 12 is an arithmetic processing unit for controlling the operation of the receiving apparatus 4. By initialization, the second controller 12 reports an address to the transmitting apparatus 3. When distribution of a playback file upon downloading is reported through the receiver 16, the second controller 12 controls the overall operation so that the playback file upon downloading which is to be subsequently transmitted is recorded in the second storage device 11. Accordingly, the receiving apparatus 4 is designed to record and maintain beforehand a first file of downloadable streaming content which is distributed by the transmitting apparatus 3.

When downloading of desired content is instructed by the user, the second controller 12 reports a download request to the transmitting apparatus 3. Accordingly, the second controller 12 controls the overall operation so that a series of files which are transmitted by the transmitting apparatus 3 in response to this report are recorded in the second storage device 11. If the download instruction is accompanied by a playback instruction for playing the streaming content, the second controller 12 records the files transmitted from the transmitting apparatus 3 in the second storage device 11 and controls the overall operation so that the files of the streaming content being downloaded are sequentially played.

More specifically, as shown in Fig. 1, when downloading and playback of streaming content containing files A, B, and C are instructed by the user, the files B and C transmitted from the transmitting apparatus 3 are sequentially stored in the second storage device 11. Concerning the streaming content, a first file (file A) has been downloaded in advance to the second storage device 11 as a playback file upon downloading. While the files B and C are being downloaded, the playback file upon downloading (file A) and the files B and C are sequentially played.

### 1-2 Operation of First Embodiment

Arranged as described above, the distribution system 1 (Fig. 2) maintains streaming content to be distributed to each user in the first storage device 5. After the streaming content 5 is encoded and converted into files by the encoder 7, the streaming content is transmitted through the transmitter 8 to the receiving apparatus 4. In the receiving apparatus 4, the streaming content transmitted in this manner is recorded in the second storage device 11. In response to an operation by the user, the streaming content is read from the second storage device 11 and is played by the decoder 13. The decoded streaming content is provided to the user through the display device 14 and an audio system. Accordingly, the distribution system 1 is designed so that, if necessary, the receiving apparatus 4 gains access to the transmitting apparatus 3 and downloads the streaming content, thereby enabling the user to preview various movies and the like.

Since streaming content is distributed in such a manner, if streaming content recorded in the first storage device 5 is updated, the distribution system 1 distributes to each receiving apparatus 4 a first section of approximately 15 minutes of the streaming content that is newly recorded in the first storage device 5 in response to the updating as a playback file upon downloading. The playback file upon downloading is stored in the second storage device 11 of the receiving apparatus 4. If the receiving apparatus 4 accesses the transmitting apparatus 3 for the first time, the address of the receiving apparatus 4 is detected. At a predetermined time, first sections of all pieces of streaming content recorded in the first storage device 5 are transmitted as playback files upon downloading to the receiving apparatus 4, and the playback files upon downloading are stored in the second storage device 11. Accordingly, in the distribution system 1, a first section of downloadable streaming content is recorded and maintained in advance in the form of a file in the second storage device 11.

On the assumption that a playback file upon downloading is recorded in advance, when downloading of streaming content is instructed by the operator, the remainder of the streaming content is divided into 15-minute sections, and the sections are stored in the second storage device 11 using a file format. Accordingly, the playback file upon downloading which is stored beforehand and all the files of the streaming content are downloaded into the second storage device 11 and are maintained.

With regard to the foregoing processing, when playback is instructed by the user, for example, as shown in Fig. 1, since a corresponding playback file upon downloading is recorded beforehand and maintained in the second storage device 11, the playback file upon downloading (first file A) is played in connection with downloading of the subsequent file B. By the time playback of the playback file upon downloading is completed, downloading of the subsequent file B is completed. When playback of the playback file upon downloading is completed, playback of the subsequent file B maintained in the second storage device 11 starts. While the file B is being played, the subsequent file C is downloaded. Accordingly, a series of files are played. While being downloaded, the streaming content desired by the user can be played.

Concerning the waiting time from the start of downloading to the start of playback, the distribution system 1 can immediately start playback of a file of a first section of the streaming content, which is recorded in advance in the second storage medium 11, in response to a playback instruction given by the user. Accordingly, the user can preview the desired content without having to wait for the completion of downloading. According to this embodiment, there is no waiting time for the user, and the burden on the user is lessened.

### 1-3 Advantages of First Embodiment

According to the foregoing arrangement, a playback file upon downloading which is assigned to be played in a period between the start of downloading the other files and the start of playing the files is distributed in advance. A first section of downloadable streaming content is used as a playback file upon downloading. Thus, immediately after the downloading starts, playback of the pre-distributed file starts. The user does not have to wait for desired content to be played. As a result, the burden on the user from the start of downloading the files to the start of playing the files is lessened.

### A-2 Second Embodiment

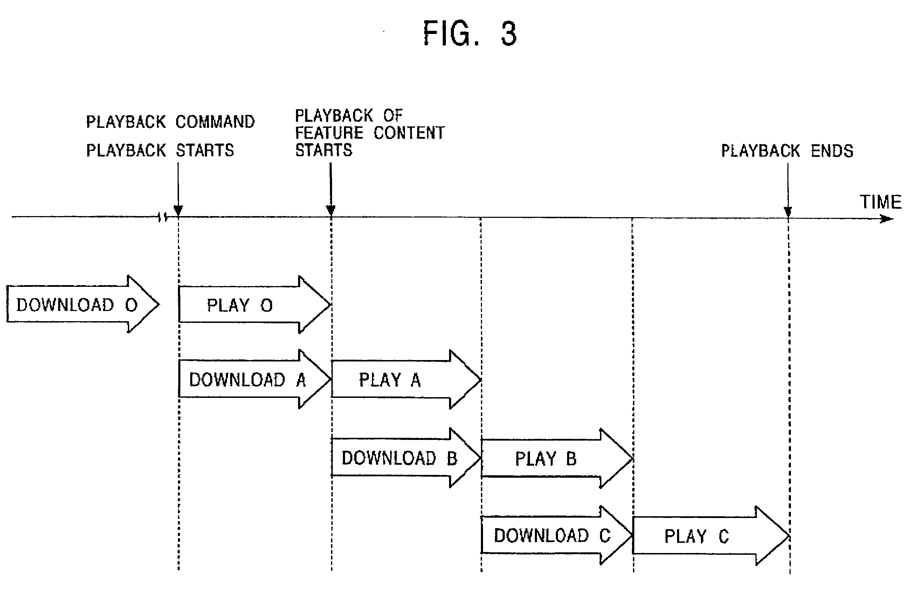

Fig. 3 is a time chart illustrating a distribution system according to a second embodiment of the present invention, by contrast with Fig. 1. In the second embodiment, as a playback file upon downloading, a file (O) of content which is stream content different from that to be downloaded and which introduces various stream content is distributed in advance. Accordingly, in actual downloading, files A to C of streaming content are sequentially downloaded. When downloading starts, playback of the introductory file O starts.

According to the second embodiment, a file of streaming content that differs from streaming content to be downloaded is distributed in advance as a playback file upon downloading. Accordingly, the playback file upon downloading can ease the user's frustration in a period between the start of downloading files and the start of playing the downloaded files, and the burden on the user is lessened. Furthermore, the user may be driven to buy other content.

### A-3 Other Embodiments

Although cases in which a transmitting apparatus accesses a receiving apparatus and periodically distributes a file of a first portion of streaming content or an introductory file have been described in the above embodiments, the present invention is not limited to these embodiments. Alternatively, such files can be distributed using access by the receiving apparatus.

Although cases in which a file of a first portion of streaming content or an introductory file is distributed as a playback file upon downloading have been described in the above embodiments, the present invention is not limited to these embodiments. For example, a file of so-called ambient video or the like can be distributed as a playback file upon downloading. In other words, various files can be applied to the playback file upon downloading.

Although cases in which video is distributed have been described in the above embodiments, the present invention is not limited to these embodiments. The present invention is also applicable to distributing music instead.

Although cases in which the receiving apparatus 4 is formed by a personal computer or a dedicated playback terminal have been described in the above embodiments, the present invention is not limited to these embodiments. For example, the present invention is widely applicable to cases such as downloading music or the like using a cellular phone and downloading music or the like from a server to a service terminal for recording music or the like in a recording medium.

### B-1 Third Embodiment

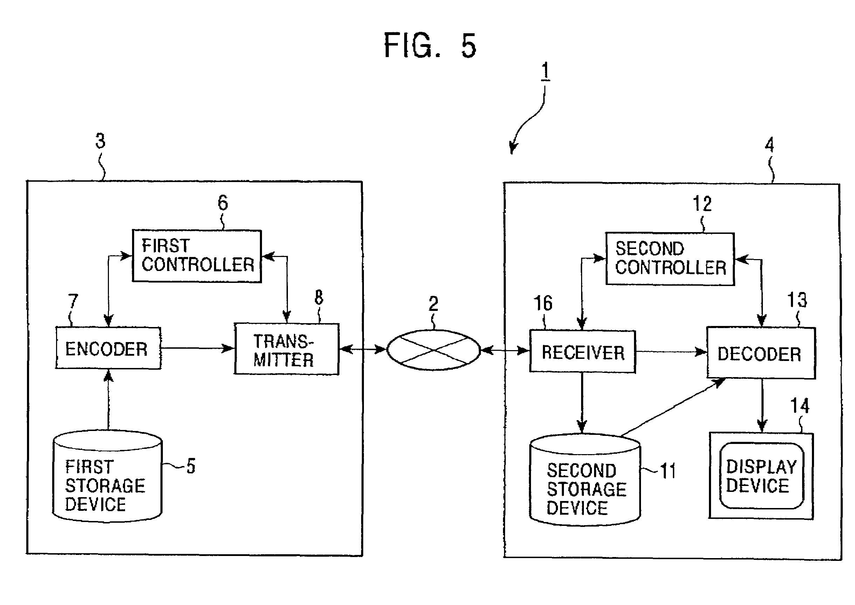

Fig. 5 is a block diagram showing a distribution system according to a third embodiment of the present invention. In a distribution system 1, streaming content such as a movie is distributed by a transmitting apparatus 3 in response to access by a receiving apparatus 4 connected to the transmitting apparatus 3 over the Internet 2. The transmitting apparatus 3 forms a content server. The transmitting apparatus 3 stores various streaming content to be distributed in a first storage device 5.

More specifically, the first storage device 5 is a large-capacity hard disk and stores various streaming content and information required for distribution processing. Under the control of a first controller 6, the first storage device 5 updates the maintained streaming content and outputs the recorded streaming content to an encoder 7. At this time, under the control of the first controller 6, the first storage device 5 outputs the consecutive streaming content data in accordance with a content distributing method. Also, transmission of the consecutive streaming content is stopped in accordance with switching of the content distributing method, and at the same time, the streaming content data is transmitted in midstream of the content. Data required for distribution processing includes the address of each receiving apparatus 4 or the like.

The encoder 7 compresses the streaming content data output from the first storage device 5 using, for example, the MPEG 2 technique. Under the control of the first controller 6, the encoder 7 outputs the compressed data in accordance with a file format that corresponds to streaming distribution or buffering distribution.

A transmitter 8 is a network interface. The transmitter 8 reports access by the receiving apparatus 4 to the first controller 6. Also, the transmitter 8 transmits various data output by the first controller 6 in response to this report and the files of the streaming content output by the encoder 7 to the receiving apparatus 4.

The first controller 6 is an arithmetic processing unit for controlling the operation of the transmitting apparatus 3. In response to an instruction input by an operator, the first controller 6 periodically updates the streaming content recorded in the first storage device 5. When a download request for downloading the streaming content is reported by access by the receiving apparatus 4, the first controller 6 controls the overall operation so that the corresponding streaming content is transmitted.

The first controller 6 controls the overall operation so as to switch the method for distributing one piece of streaming content between streaming distribution and buffering distribution. Specifically, when starting distribution, the first controller 6 starts distributing the content using streaming distribution. As a result, the receiving side has little waiting time, thereby improving user-friendliness. When the transmission error rate increases, streaming distribution is changed to buffering distribution, and hence deterioration in the image quality and the sound quality is prevented. In buffering distribution, when the bandwidth of a transmission channel 2 allows only a low tolerance, the distribution method is changed to streaming distribution using multicasting for content that can be distributed using multicast communication.

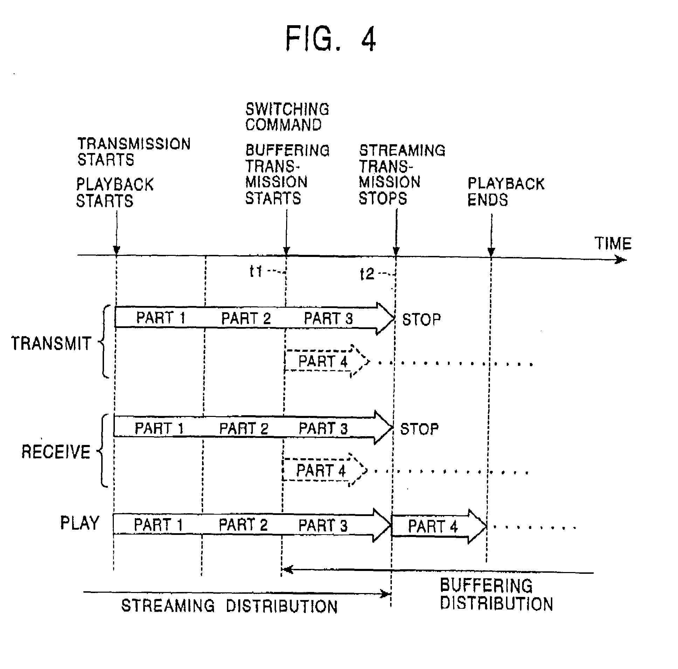

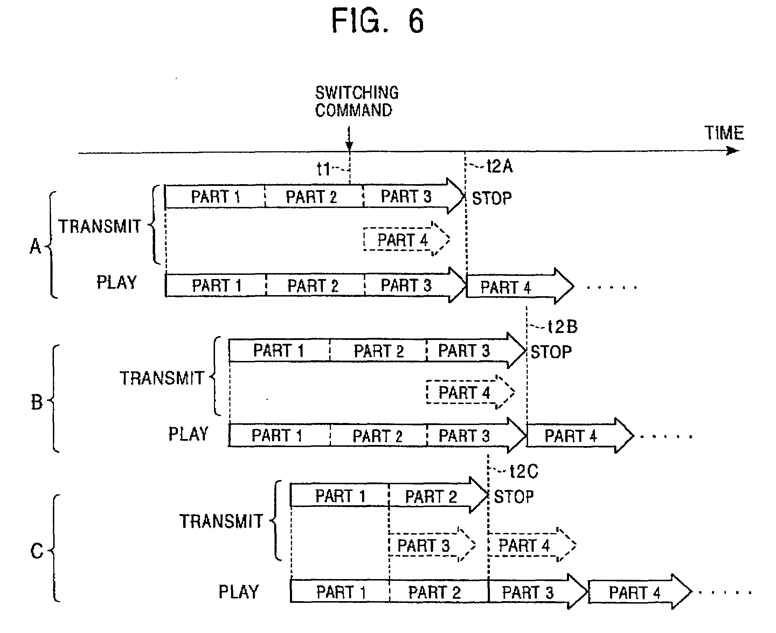

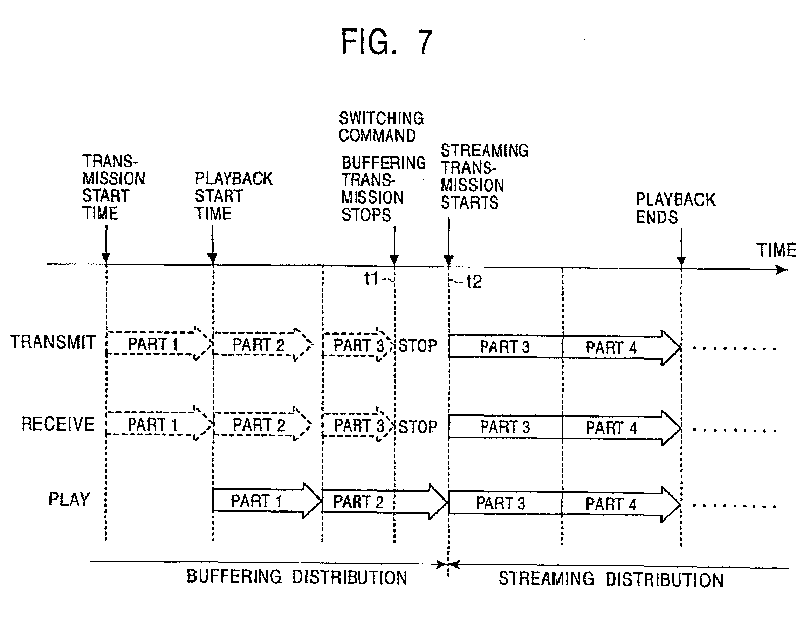

Fig. 4 is a time chart illustrating the switching from streaming distribution to buffering distribution. In Fig. 4 and in Figs. 6 and 7 described hereinafter, parts 1 to 4 distributed by streaming distribution do not indicate files. Instead, parts 1 to 4 distributed by streaming distribution are sections, in contrast with files distributed by buffering distribution. When the first controller 6 determines to switch the distribution method from streaming distribution to buffering distribution based on the transmission state or the content, a program that has made the determination transmits a switching command for switching the distribution method at a predetermined time t1. In response to the switching command, the first controller 6 stops the streaming distribution of the streaming content at a streaming distribution stop time t2 at which a predetermined period of time has passed.

When the first controller 6 stops the streaming distribution at the streaming distribution stop time t2, an untransmitted portion of the streaming content data is detected (that is, for example, when the streaming distribution of two-hour-long streaming content is stopped at a point at which an hour-long portion has been distributed, the remaining one-hour-long data is detected as the untransmitted data). In such a case, the untransmitted data is distributed by buffering distribution at the time t1 at which the switching command is received.

In the buffering distribution, the first controller 6 distributes the remaining streaming content from the time t1 onward using files in units of predetermined playback time so that the receiving apparatus 4 can play the remaining streaming content data distributed by the buffering distribution at a time at which playback of the content that has been distributed up to the streaming distribution stop time t2 is completed.

Accordingly, when playback of tne streaming content that has been distributed up to the streaming distribution stop time t2 is completed by the receiving apparatus 4, a file of the remaining streaming content is stored in a second storage device 11 of the receiving apparatus 4. By playing the file stored in the second storage device 11, the streaming content which is distributed using two distribution methods can be continuously played.

Also, the remaining file subsequent to the file distributed by buffering distribution is divided into files in similar units, and the files are distributed. As a result, as illustrated in Fig. 16, the files are continuously played by the receiving apparatus 4. In accordance with the length of a file distributed by the buffering distribution (playback time of the decoded file), the first controller 6 sets the period from the time t1 at which the switching command is received to the streaming distribution stop time t2.

More specifically, Fig. 6 illustrates switching of a three-system distribution from streaming distribution to buffering distribution. The three systems A, B, and C differ in distribution start time. In response to a distribution method switching command at the time t1, the first controller 6 determines the playback time of untransmitted data. In this example, system A has untransmitted data or an amount which is slightly larger than two files to be distributed by buffering distribution. Thus, the transmission start time of the data that corresponds to the last file (part 4) to be distributed by buffering distribution is set as a streaming distribution stop time t2A. The data which will remain untransmitted at the streaming distribution stop time t2A is converted into a file (part 4), and the file is distributed by buffering distribution at a predetermined time after the switching command time t1.

Compared with system A, system B has a larger amount of untransmitted data at the switching command time t1. However, this untransmitted amount is less than three files to be distributed by buffering distribution. As in system A, system B sets the transmission start time of the data that corresponds to the last file (part 4) to be distributed by buffering distribution as a streaming distribution stop time t2B. Since the amount of untransmitted data for system B is larger than that for system A, buffering distribution of the data which will remain untransmitted at the streaming distribution stop time t2B starts at a point subsequent to that for system A.

System C has a yet larger amount of untransmitted data at the switching command time t1. Since the amount of untransmitted data is larger than three files to be distributed by buffering distribution, the transmission start time of the data that corresponds to the second last file (part 3) to be distributed by buffering distribution is set as a streaming distribution stop time t2C. The part 3 and part 4 files are sequentially distributed by buffering distribution so that the distribution of the second last file (part 3) is completed at the streaming distribution stop time t2C.

Accordingly, the transmitting apparatus 3 is designed to switch the distribution method from streaming distribution to buffering distribution so that the streaming content can be continuously played by the receiving side. If the amount of untransmitted data at the time t1 at which the switching command is received is less than two files to be distributed by buffering distribution, the first controller 6 completes the distribution of the streaming content by streaming distribution without switching the operation to buffering distribution.

In contrast, Fig. 7 is a time chart showing switching from buffering distribution to streaming distribution. In accordance with the transmission state, at a time t1, the first controller 6 receives a switching command for switching the distribution from buffering distribution to streaming distribution, and the first controller 6 immediately stops the buffering distribution. The first controller 6 determines the time at which the receiving apparatus 4 completes the playback of the files which have been distributed by buffering distribution. The determined time is adjusted by taking into consideration the delay time required for transmission, the delay time required by the receiving apparatus 4 to decode files, and the like, and the adjusted time is set as a streaming distribution start time t2. At the time t2, the overall operation is controlled so that the data that corresponds to the first file after the buffering distribution is stopped is distributed by streaming distribution.

Accordingly, the transmitting apparatus 3 switches the distribution method from buffering distribution to streaming distribution so that the streaming content can be continuously played by the receiving side.

The receiving apparatus 4 is formed by, for example, a personal computer or a dedicated terminal for music distribution. The receiving terminal 4 downloads files of streaming content from the transmitting apparatus 3 and plays the files.

The second storage device 11 in the receiving apparatus 4 is formed by a hard disk. The second storage device 11 records various information required for downloading information from the receiving apparatus 3, files of the streaming content distributed by the transmitting apparatus 3, and the like. Under the control of the second controller 12, the second storage device 11 outputs the recorded files to the decoder 13. The decoder 13 decodes the files output by the second storage device 11 and data directly input by the receiver 16 and outputs the decoded data. A display device 14 formed by a liquid crystal display displays video data output by the decoder 13. The receiving apparatus 4 is designed to monitor audio data from among the data output from the decoder 13 using an audio processing system (not shown).

The receiver 16 is a network interface. The receiver 16 reports access by the transmitting apparatus 3 to the second controller 12 and conveys output data from the second controller 12 to the transmitter 8. The receiver 16 outputs various files transmitted by the transmitting apparatus 3 to the second storage device 11 and to the decoder 13.

The second controller 12 is an arithmetic processing unit for controlling the operation of the receiving apparatus 4. In response to a playback instruction given by a user to play desired content, the second controller 12 reports a download request to the transmitting apparatus 3. The second controller 12 determines whether a series of files transmitted in response to the report by the transmitting apparatus 3 is distributed by streaming distribution or buffering distribution based on the determination of an identifier set to each file.

If the transmitted files are distributed by streaming distribution, the second controller 12 controls the overall operation so that the decoder 13 directly decodes the output data from the receiver 16, thereby performing streaming playback processing. If the transmitted files are distributed by buffering distribution, the second controller 12 controls the overall operation so that the files are recorded in the second storage device 11. When recording of one file in the second storage device 11 is completed, the second controller 12 controls the overall operation so that this file recorded in the second storage device 11 is played by the decoder 13, thereby performing buffering playback processing.

Referring to Fig. 4, when a file is distributed by buffering distribution during streaming playback, the file being distributed by buffering distribution is recorded in the second storage device 11 while the streaming playback processing is performed. When the streaming playback is completed. the overall operation is switched to buffering playback. In contrast, when the distribution is switched from buffering distribution to streaming distribution, a file which is partially stored in the second storage device 11 (part 3 in Pig. 7) is regarded as a file which is not recorded in the second storage device 11, and the processing is stopped. When the decoder 13 completes the processing of the files which are distributed and recorded in the second storage device 11, the overall operation is switched to streaming playback. In the third embodiment, the switching between streaming distribution and buffering distribution is performed based on a report from the transmitting apparatus 3 to the receiving apparatus 4 or based on monitoring of the data received by the receiver 16, which is performed by the receiving apparatus 4.

### B-2 Operation of Third Embodiment

According to the distribution system 1 arranged as described above (Fig. 5), streaming content to be distributed to each user is stored in the first storage device 5. The streaming content is subjected to encoding by the encoder 7, and the encoded streaming content is transmitted to the receiving apparatus 4 through the transmitter 8. In the receiving apparatus 4, the transmitted streaming content is played by the decoder 13, and the streaming content is provided to the user through the display device 14 and an audio system. Accordingly, in the distribution system 1, the receiving apparatus 4 accesses the transmitting apparatus 3 if necessary, and the receiving apparatus 4 downloads and plays the streaming content, thereby enabling the user to preview various movies and the like.

When distributing the streaming content, the distribution system 1 starts distributing the streaming content by streaming distribution and switches the distribution method between buffering distribution and streaming distribution in accordance with the transmission state. Accordingly, the distribution system 1 which has advantages of both distribution methods can distribute the streaming content.

In other words, since the distribution of the streaming content starts with streaming distribution, there is no waiting time for the user, and user-friendliness is improved. When the error rate increases, the distribution method is switched to reliable buffering distribution, and hence deterioration in the image quality and the sound quality is prevented. When the transmission bandwidth allows only a low tolerance, the distribution method is changed to streaming distribution, and the streaming content is distributed using multicast communication, thereby coping with an increase in the number of transmission destinations.

The distribution method is changed from streaming distribution to buffering distribution in response to a switching command in accordance with the transmission state (at the time t1 in Figs. 4 and 6). At this time, the amount of remaining untransmitted data is determined. If the amount of untransmitted data is less than or equal to a predetermined amount that corresponds to predetermined playback time, the distribution of the streaming content remains unchanged and is performed by streaming distribution. In contrast, when the amount of untransmitted data is two or more than two files to be transmitted by buffering distribution, one file is distributed by buffering distribution. The time that corresponds to the playback start time of the distributed file is set as the streaming distribution stop time t2, and streaming distribution is stopped at the time t2. The untransmitted streaming content data is converted into files and the files are sequentially distributed by buffering distribution at a time prior to the streaming distribution stop time t2, that is, a time at which the playback can be implemented at the streaming distribution stop time t2.

In response to this, the receiving apparatus 4 performs the following processing. Specifically, the decoder 13 decodes and monitors data which is sequentially distributed by streaming distribution. When buffering distribution starts at a point prior to the streaming distribution stop time t2, the data distributed by buffering distribution is sequentially recorded in the second storage device 11. At the receiving apparatus 4 side, when the data distributed by streaming distribution is interrupted at the streaming distribution stop time t2, the subsequent files recorded in the second storage device 11 are played. Thus, the continuous streaming content distributed by streaming distribution and buffering distribution can be played.

In order to continuously play the streaming content, the files which are distributed by buffering distribution and which are recorded in the second storage device 11 are subjected to the following processing. Specifically, the transmitting apparatus 3 completes distribution to the receiving apparatus 4 at the streaming distribution stop time t2 at which the streaming content can be decoded by the decoder 13. When the data distributed by streaming distribution is interrupted, the receiving apparatus 4 starts playing the files stored in the second storage device 11, thereby continuously playing the consecutive streaming content.

In contrast, when the distribution method is switched from buffering distribution to streaming distribution (Fig. 7), buffering distribution is immediately stopped in response to a distribution method switching command. At a predetermined time (t2), streaming distribution of the data that corresponds to the beginning of the interrupted file starts so that the remaining content can be played at a time at which the playback of the files which are already distributed to the receiving apparatus 4 is completed. At the receiving apparatus 4 side, the playback of the files recorded in the second storage device 11 is completed. Subsequently, data distributed by the transmitting apparatus 3 by streaming distribution is processed by the receiving apparatus 4, and hence the distributed streaming content can be continuously played.

### B-3 Advantages of Third Embodiment

According to the foregoing arrangement, the distribution method is switched between streaming distribution and buffering distribution, and one piece of streaming content is distributed. Thus, the distribution system 1 which has advantages of both streaming distribution and buffering distribution can distribute the streaming content.

At the streaming distribution stop time, streaming distribution is stopped. At a time prior to the streaming distribution stop time, the streaming content data which will remain untransmitted at the streaming distribution stop time is distributed by buffering distribution. In other words, the distribution method is switched, and buffering distribution is performed. In buffering distribution, the untransmitted streaming content data is converted into files and the files are transmitted so that the distribution of at least one file is completed at the streaming distribution stop time. As a result, the consecutive streaming content can be continuously played, and hence the distribution method is switched from streaming distribution to buffering distribution.

### B-4 Other Embodiments

Although cases have been described in the third embodiment in which the streaming distribution stop time is set based on files to be distributed by buffering distribution, the present invention is not limited to the third embodiment. The important thing is that the streaming distribution stop time should be set so that a file distributed by buffering distribution can be played at the streaming distribution stop time. Also, it is necessary to set the amount of data to be distributed by buffering distribution in parallel with streaming distribution. The time and the amount of data can be changed in accordance with the transmission efficiency of buffering distribution or the like.

Although cases have been described in the third embodiment in which files distributed by buffering distribution are temporarily stored In a storage device such as a hard disk in a receiving apparatus and are subjected to processing, the present invention is not limited to the third embodiment. Alternatively, various storage devices such as a memory can be used instead.

Although cases in which video is distributed have been described in the third embodiment, the present invention is not limited to the third embodiment. The present invention is widely applicable to distributing music.

Although cases in which the receiving apparatus 4 is formed by a personal computer or a dedicated playback terminal have been described in the third embodiment, the present invention is not limited to the third embodiment. The present invention is widely applicable to downloading music or the like by a cellular phone or to downloading music or the like from a server by a service terminal for recording music or the like in a recording medium.

### C-1 Fourth Embodiment

As in the third embodiment, Fig. 5 is a block diagram showing a distribution system 1 according to a fourth embodiment of the present invention.

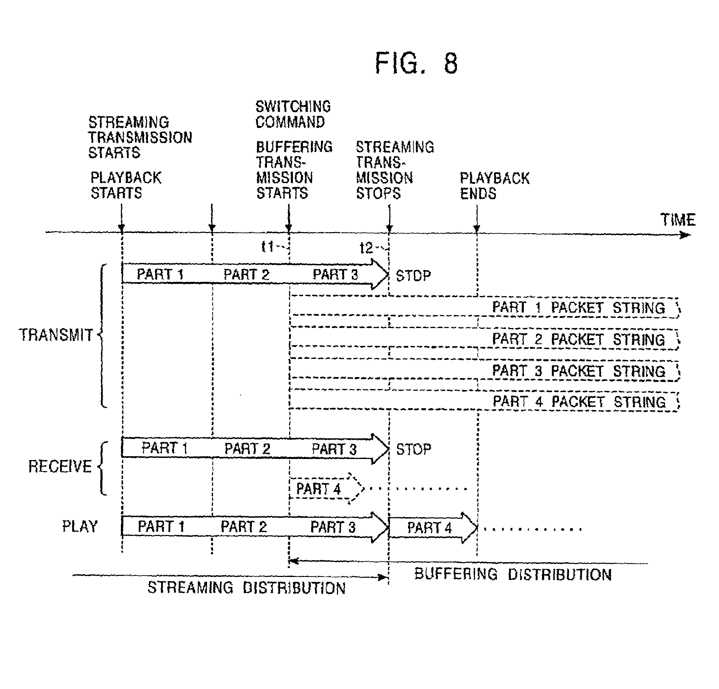

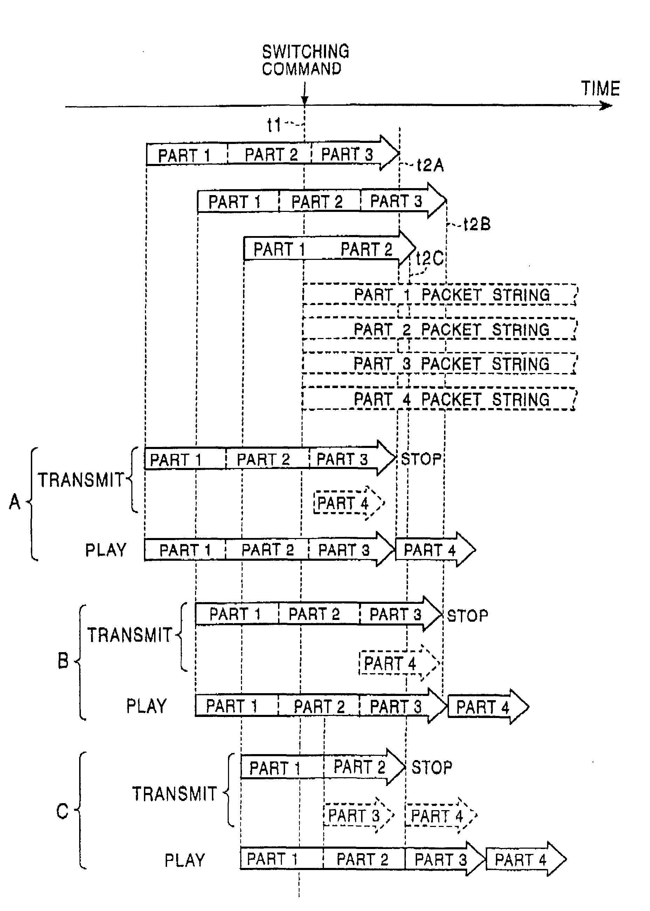

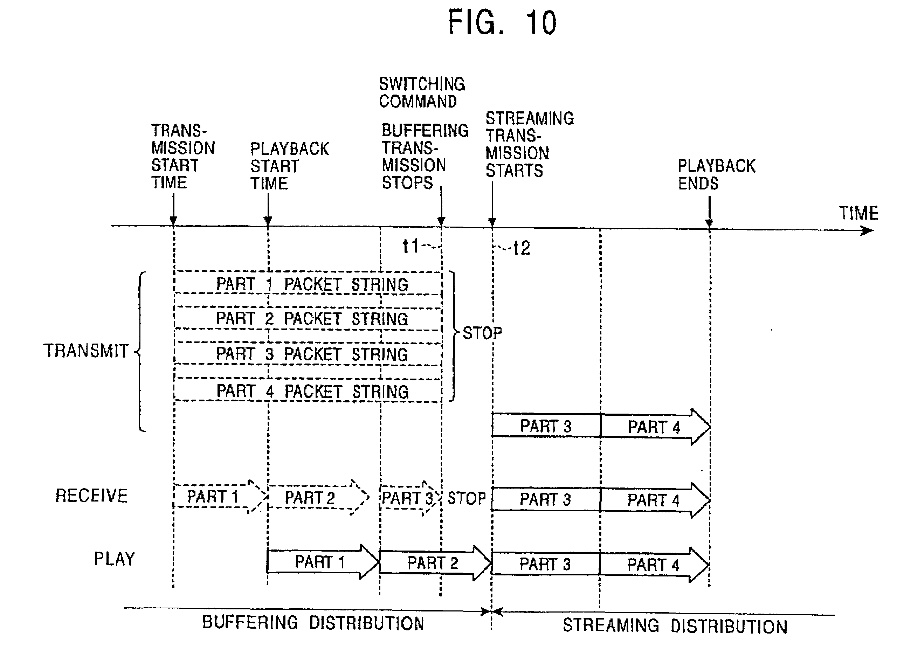

Fig. 8 is a time chart showing switching from streaming distribution to buffering distribution. In Fig. 8 and in Figs. 9 and 10 described hereinafter, parts 1 to 4 distributed by streaming distribution do not indicate files. Instead, parts 1 to 4 distributed by streaming distribution are sections, in contrast with files distributed by buffering distribution. When a first controller 6 determines to switch a distribution method from streaming distribution to buffering distribution based on the transmission state of content, a program that has made the determination transmits a switching command for switching the distribution method at a predetermined time t1. In response to the switching command, the first controller 6 reports the switching command to a receiving apparatus 4 and starts buffering distribution using multicast communication,

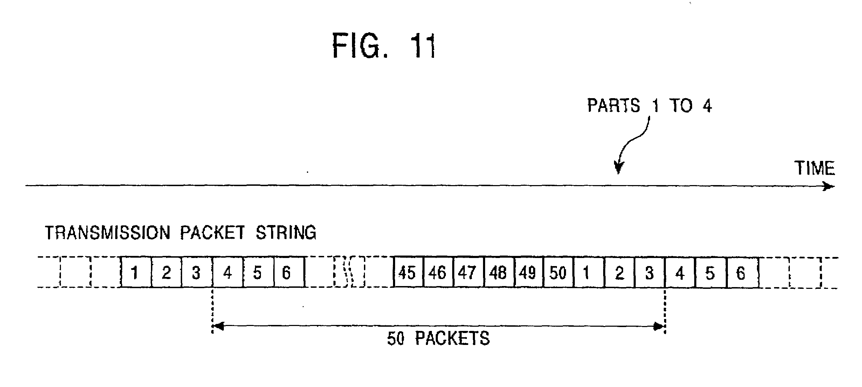

Buffering distribution using multicast communication is performed by dividing streaming content being transmitted into a plurality of files in units of predetermined playback time and by transmitting each file in terms of a packet string. As illustrated in Fig. 11, for example, 50 packets are assigned to each file. Each packet string is formed by sequentially and cyclically repeating 50 packets.

A transmitting apparatus 3 switches the overall operation so that the streaming content which is distributed by buffering distribution using multicast communication can be obtained by the receiving apparatus 4.

In this manner, the first controller 6 starts buffering distribution using multicast communication. At a time t2 at which the receiving apparatus 4 becomes switchable from streaming playback to buffering playback in a continuous manner, the first controller 6 stops streaming transmission to the receiving apparatus 4.

In buffering playback, playback cannot start unless one file is completely downloaded. For this reason, the first controller 6 sets a point which is subsequent to the start of buffering distribution using multicast communication, which is subsequent to completion of transmission of 50 packets which is one file, and at which distribution of data that corresponds to the last portion of a certain file being transmitted using multicast communication is completed as the streaming transmission stop time t2 with respect to the receiving apparatus 4. If the data transfer rate which is converted into the playing speed is set to the same rate in streaming transmission and buffering transmission, the time t2 is set to a point which is subsequent to completion of transmission of a part being transmitted at the time t1 at which the switching command is received and at which transmission of the subsequent part is completed.

Accordingly, even when the operation of the receiving apparatus 4 is switched from streaming playback to buffering playback, the streaming content can be continuously played.

Fig. 9 is a time chart illustrating switching of a plurality of streaming distributions to buffering distributions by the foregoing processing. In this case, recipients A, B, and C each have a different distribution start time. In response to a distribution method switching instruction at the time t1, the first controller 6 starts distributing four flies (parts 1 to 4), which are created by dividing the streaming content, at the time t1 by buffering distribution using multicast communication.

Since system A has untransmitted data of an amount which is slightly larger than two files to be distributed by buffering distribution, the first controller 6 stops streaming distribution at a time t2A at which transmission of data that corresponds to the last file (part 4) being distributed by buffering distribution starts. Compared with system A, system B has a larger amount of untransmitted data at the switching command time t1. However, this untransmitted amount is less than three files to be distributed by buffering distribution. As in system A, the first controller 6 stops streaming distribution at a time t2B at which transmission of data that corresponds to the last file (part 4) being distributed by buffering distribution starts. In contrast, system C has a yet larger amount of untransmitted data at the switching command time t1. Since the amount of untransmitted data is larger than three files to be distributed by buffering distribution, the first controller 6 stops streaming distribution at a time t2C at which transmission of data that corresponds to the second last file (part 3) being distributed by buffering distribution starts.

Accordingly, the transmitting apparatus 3 is designed to switch the distribution method from streaming distribution to buffering distribution so that the streaming content can be continuously played by the receiving side. If the amount of untransmitted data is less than two files to be distributed by buffering distribution at the time t1 at which the switching command is received, the first controller 6 completes the distribution of the streaming content by streaming distribution without switching the operation to buffering distribution.

In order to switch the distribution method from streaming distribution to buffering distribution and vice versa which is described below, the first controller 6 manages the distribution progress state of each receiving apparatus 4 that has given a streaming distribution request. In accordance with the management result, the first controller 6 detects the streaming distribution end time t2 (Fig. 9) and the streaming distribution start time t2 (Fig. 10).

In contrast, Fig. 10 is a time chart showing switching from buffering distribution to streaming distribution. If a switching command for switching the distribution method from buffering distribution to streaming distribution is obtained at the time t1 in accordance with the transmission state, the first controller 6 reports the command to the receiving apparatus 4 and immediately stops buffering distribution. The first controller 6 determines the time at which the receiving apparatus 4 completes the playback of the files which have been distributed by buffering distribution. The determined time is adjusted by taking into consideration the delay time required for transmission, the delay time required by the receiving apparatus 4 to decode the files, and the like, and the adjusted time is set as the streaming distribution start time t2. The overall operation is controlled so that streaming distribution of the data that corresponds to the first file after the buffering distribution is stopped starts at the time t2.

If the bandwidth of a transmission channel 2 is twice or more than twice the bandwidth required for performing buffering distribution using multicast communication, and if the bandwidth required for performing buffering distribution using multicast communication becomes smaller than the bandwidth required for performing streaming distribution using unicast communication, the first controller 6 switches the distribution method from streaming distribution to buffering distribution. In contrast. if the bandwidth of the transmission channel 2 is less than twice the bandwidth required for performing buffering distribution using multicast communication, and if the transmission channel 2 allows a bandwidth margin which becomes equal to the bandwidth required for performing buffering distribution using multicast communication, the first controller 6 switches the distribution method from streaming distribution to buffering distribution.

Accordingly, the transmitting apparatus 3 is designed to switch the distribution method from buffering distribution to streaming distribution so that the receiving side can continuously play the streaming content.

The receiving apparatus 4 is formed by, for example, a personal computer or a dedicated terminal for music distribution. The receiving apparatus 4 downloads files of streaming content from the transmitting apparatus 3 and plays the files.

A second storage device 11 in the receiving apparatus 4 is formed by a hard disk. The second storage device 11 records various information required for downloading information from the receiving apparatus 3, files of the streaming content distributed by the transmitting apparatus 3, and the like. Under the control of a second controller 12, the second storage device 11 outputs the recorded files to a decoder 13. The decoder 13 decodes the files output by the second storage device 11 and data directly input by a receiver 16 and outputs the decoded data. A display device 14 formed by a liquid crystal display displays video data output by the decoder 13. The receiving apparatus 4 is designed to monitor audio data from among the data output from the decoder 13 using an audio processing system (not snown).

The receiver 16 is a network interface. The receiver 16 reports access by the transmitting apparatus 3 to the second controller 12 and conveys output data from the second controller 12 to a transmitter 8. The receiver 16 outputs various files transmitted by the transmitting apparatus 3 to the second storage device 11 and to the decoder 13.

The second controller 12 is an arithmetic processing unit for controlling the operation of the receiving apparatus 4. In response to a playback instruction given by a user to play desired content, the second controller 12 reports a download request to the transmitting apparatus 3. The second controller 12 controls the overall operation so that the data which is distributed, using streaming distribution, by the transmitting apparatus 3 in response to this report is sequentially played by the decoder.

If a command for switching the distribution method to buffering distribution is reported from the transmitting apparatus 3 while the streaming content distributed by streaming distribution is being played, the data being distributed using streaming distribution is processed. At the same time, the overall operation is switched so that the subsequent streaming content, which is after the streaming distribution stops, can be received using files which are distributed by buffering distribution.

More specifically, with reference to Fig. 9, the overall operation of a receiving apparatus of recipient A is controlled so that, after the time t1, data which is transmitted by the part 4 packet string after the time t2A is sequentially obtained and is recorded in the second storage device 11. Similarly, the overall operation of a receiving apparatus of recipient B is controlled so that, after the time t1, data which is transmitted by the part 4 packet string is sequentially obtained and is recorded in the second storage device 11. In contrast, the operation of a receiving apparatus of recipient C is controlled so that, after the time t1, data which is transmitted by the part 3 packet string is sequentially obtained and is recorded in the second storage device 11. After the part 3 data is completely obtained, data transmitted by the part 4 packet string is sequentially obtained and is stored in the second storage device 11 in *a* similar manner.

When streaming distribution is stopped at the time t2. the overall operation is controlled so that the files recorded in the second storage device 11 are sequentially played by the decoder 13.

In contrast, when a command for switching the distribution method to streaming distribution is reported by the transmitting apparatus 3 while buffering playback is being performed, the operation is continued as it is. When playback of the files stored in the second storage device 11 is completed by the decoder 13, the overall operation is switched to streaming playback. The overall operation of the corresponding streaming distribution is controlled so that data transmitted by the transmitting apparatus 3 is directly processed by the decoder 13.

### C-2 Operation of Fourth Embodiment

According to the distribution system 1 arranged as described above (Fig. 5), streaming content to be distributed to each user is stored in a first storage device 5. The streaming content is subjected to encoding by an encoder 7, and the encoded streaming content is transmitted to the receiving apparatus 4 through the transmitter 8. In the receiving apparatus 4, the transmitted streaming content is played by the decoder 13, and the streaming content is provided to the user through the display device 14 and an audio system. Accordingly, in the distribution system 1. the receiving apparatus 4 accesses the transmitting apparatus 3 if necessary, and the receiving apparatus 4 downloads and plays the streaming content, thereby enabling the user to preview various movies and the like.

When distributing the streaming content, the distribution system 1 starts distributing the streaming content by streaming distribution using unicast communication and then switches the distribution method between buffering distribution using multicast communication and streaming distribution using unicast communication in accordance with the transmission state. Accordingly, the distribution system 1 which has advantages of both distribution methods can distribute the streaming content on demand.

In other words, since the distribution of the streaming content starts with streaming distribution, there is no waiting time for the user, and user-friendliness is improved. When the error rate increases or when the transmission bandwidth allows only a low tolerance, the distribution method is switched to buffering distribution which is reliable and which can efficiently distribute data to many destinations. Hence, deterioration in the image quality and the sound quality is prevented. Also, the distribution system 1 can cope with an increase in the number of destinations.

The distribution method is switched from streaming distribution to buffering distribution in response to a switching command in accordance with the transmission state (at the time t1 in Figs. 8 and 9). The switching command is reported to the receiving apparatus 4, and the streaming content is divided into a plurality of files. Each file is allocated to a packet string and is distributed. In packet strings, files are sequentially allocated to 50 consecutive packets and are distributed by sequentially and cyclically repeating the packets.

After the start of packet transmission by buffering distribution using multicast communication, when transmission of data in a file is completed, and when transmission of data that corresponds to the last portion of a certain file is completed (time t2A to t2C in Figs. 8 and 9), streaming distribution by unicast communication is stopped.

At the receiving apparatus 4 side, data distributed using streaming distribution in response to a streaming-content transmission request is sequentially processed by the decoder 13 and is monitored, thereby monitoring the desired on-demand streaming content without any waiting time. In response to a switching command, data which is distributed using streaming distribution is subjected to processing. At the same time, data distributed by buffering distribution using multicasting is stored in the second storage device 11. Subsequently, streaming distribution is stopped, and the operation is switched to process the data stored in the second storage device 11. In this manner, the operation can be switched between streaming playback and buffering playback.

At this time, the receiving apparatus 4 switches the operation so as to cope with the transmitting apparatus 3 which has stopped streaming distribution. Specifically, from among packet strings for four parts being distributed by multicast communication, the receiving apparatus 4 selectively obtains data containing a packet string that corresponds to a file subsequent to the streaming content part which is currently being received, and the receiving apparatus 4 switches the operation to buffering playback. As a result, the consecutive streaming content can be continuously played.

After the operation is switched, while data is selectively obtained from among packet strings for the subsequent files and is stored in the second storage device 11, the stored data is sequentially played. As a result, the consecutive streaming content can be continuously played by buffering playback.

If the transmission channel 2 starts to allow a tolerance, the distribution system 1 switches the streaming content distribution from buffering distribution using multicast communication to streaming distribution using unicast communication based on the determination by the first controller 6 in the transmitting apparatus 3.

Specifically, in the distribution system 1, the transmitting apparatus 3 reports the distribution switching to the receiving apparatus 4 (time t1 in Fig. 10), and buffering distribution is stopped. In accordance with the playback progress state of each receiving apparatus 4, streaming distribution of parts subsequent to the interrupted buffering playback to each receiving apparatus 4 starts at the time t2 which corresponds to the processing performed by each receiving apparatus 4 so that streaming distribution is in time for completion of playing files which are stored in the second storage device 11 and which are distributed in their entirety by buffering distribution.

At the receiving apparatus 4 side, when buffering distribution is stopped, the recording of data in the second storage device 11 is stopped. When the processing of files recorded in the second storage device 11 is completed, data distributed by streaming distribution, which is started so as to be in time for the completion of the buffering processing, is processed by the decoder 13. Thus, the consecutive streaming content can be continuously monitored.

### C-3 Advantages of Fourth Embodiment

According to the foregoing arrangement, a piece of streaming content is distributed by switching the distribution method between streaming distribution using unicast communication and buffering distribution using multicast communication. Thus, the streaming content can be distributed by a system which has advantages of both distribution methods.

The streaming content is distributed by streaming distribution using unicast communication. At the predetermined switching start time t1, files created by dividing the streaming content are allocated to a plurality of packet strings in which packets are sequentially and cyclically repeated and are distributed, and hence buffering distribution using multicast communication starts. At the predetermined time t2 subsequent to the switching start time t1, streaming distribution is stopped. The predetermined time t2 is configured in the following manner. Concerning a packet string formed of the streaming content data which is subsequent to the streaming distribution stop and which is thus undistributed, the time at which a cyclical distribution of packets forming the packet string makes at least one round since the switching start time t1, which is also the time at which the data preceding the packet data in the previous round is distributed by streaming distribution, is set as the predetermined time t2. Accordingly, the consecutive streaming content can be continuously played, and streaming distribution using unicast communication can be switched to buffering distribution using multicast communication.

### C-4 Other Embodiments

Although cases have been described in the fourth embodiment in which streaming content is divided in units of predetermined playback time into files which are to be distributed by buffering distribution, the present invention is not limited to the fourth embodiment. If necessary, files to be distributed by buffering distribution can be set in various manners.

Although cases have been described in the fourth embodiment in which streaming distribution is switched to buffering distribution by starting buffering distribution using multicasting of all the files created by dividing the streaming content, the present invention is not limited to the fourth embodiment. Advantages similar to those of the fourth embodiment can be achieved by starting buffering distribution using multicasting of untransmitted portions of the content distributed by streaming distribution, that is, portions to be distributed using multicasting.

Although cases have been described in the fourth embodiment in which files distributed by buffering distribution are temporarily stored in a storage device formed by a hard disk of a receiving apparatus and are processed, the present invention is not limited to the fourth embodiment. For example, various storage devices such as a memory can be used instead.

Although cases in which video is distributed have been described in the fourth embodiment, the present invention is not limited to the fourth embodiment. The present invention is widely applicable to distributing music.

Although cases in which the receiving apparatus 4 is formed by a personal computer or a dedicated playback terminal have been described in the fourth embodiment, the present invention is not limited to the fourth embodiment. The present invention is widely applicable to downloading music or the like by a cellular phone or to downloading music or the like from a server by a service terminal for recording music or the like in a recording medium.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information providing method for providing desired streaming content to an information receiving apparatus, comprising:
a first transmitting step of transmitting first streaming content to the information receiving apparatus;
a second transmitting step of transmitting second streaming content in response to a request signal for the desired streaming content from the information receiving apparatus; and
a playing step of playing the first streaming content and the second streaming content;
wherein the first streaming content comprises content to be played until the second streaming content becomes playable.

2. An information providing method according to Claim 1, wherein the second streaming content comprises the desired streaming content requested by the information receiving apparatus.

3. An information providing method according to Claim 1, wherein:
the first streaming content comprises a first divisional file to be played from among a plurality of divisional files created by dividing the desired streaming content into a plurality of files; and
the second streaming content comprises streaming content obtained by removing the first streaming content from the desired streaming content.

4. An information providing method according to Claim 3, wherein the first streaming content comprises the divisional files subsequent to the first divisional file to be played.

5. An information providing apparatus for providing desired streaming content to an information receiving apparatus, comprising:
first transmitting means for transmitting first streaming content to the information receiving apparatus;
second transmitting means for transmitting second streaming content in response to a request signal for the desired streaming content from the information receiving apparatus; and
playing means for playing the first streaming content and the second streaming content;
wherein the first streaming content comprises content to be played until the second streaming content becomes playable.

6. An information providing apparatus according to Claim 5, wherein the second streaming content comprises the desired streaming content requested by the information receiving apparatus.

7. An information providing apparatus according to Claim 5, wherein:
the first streaming content comprises a first divisional file to be played from among a plurality of divisional files created by dividing the desired streaming content into a plurality of files; and
the second streaming content comprises streaming content obtained by removing the first streaming content from the desired streaming content.

8. An information providing apparatus according to Claim 7, wherein the first streaming content comprises the divisional files subsequent to the first divisional file to be played.

9. An information providing method for providing desired streaming content to an information receiving apparatus, comprising:
a transmitting step of transmitting the desired streaming content by switching between streaming distribution and buffering distribution.

10. An information providing method according to Claim 9, further comprising:
a streaming distribution step of distributing the desired streaming content by streaming distribution;
a buffering transmission step of performing buffering transmission of divisional files for performing buffering distribution in response to a switching signal for switching from streaming distribution to buffering distribution; and
a streaming distribution terminating step of terminating streaming distribution;
wherein the divisional files are created by dividing the desired streaming content into a plurality of blocks; and
the buffering of the divisional files for performing buffering distribution starts so that the desired streaming content can be continuously played by the information receiving apparatus.

11. An information providing method according to Claim 9, further comprising:
a buffering distribution step of distributing the desired streaming content by buffering distribution;
a buffering-transmission terminating step of terminating buffering transmission for performing buffering distribution in response to a switching signal for switching from buffering distribution to streaming distribution; and
a streaming distribution step of performing streaming distribution of the received streaming content which is distributed by buffering distribution so that the streaming content can be continuously played by the information receiving apparatus.

12. An information providing apparatus for providing desired streaming content to an information receiving apparatus, comprising:
transmitting means for transmitting the desired streaming content by switching between streaming distribution and buffering distribution.

13. An information providing apparatus according to Claim 12, further comprising:
streaming distribution means for distributing the desired streaming content by streaming distribution;
buffering transmission means for starting buffering transmission of divisional files for performing buffering distribution in response to a switching signal for switching from streaming distribution to buffering distribution; and
streaming distribution terminating means for terminating streaming distribution;
wherein the divisional files are created by dividing the desired streaming content into a plurality of blocks; and
the buffering of the divisional files for performing buffering distribution starts so that the desired streaming content can be continuously played by the information receiving apparatus.

14. An information providing apparatus according to Claim 12, further comprising:
buffering distribution means for distributing the desired streaming content by buffering distribution;
buffering-transmission terminating means for terminating buffering transmission for performing buffering distribution in response to a switching signal for switching from buffering distribution to streaming distribution; and
streaming distribution means for performing streaming distribution of the received streaming content which is distributed by buffering distribution so that the streaming content can be continuously played by the information receiving apparatus.

15. An information providing method for providing desired streaming content to an information receiving apparatus, comprising:
a switching step of switching distribution of the desired streaming content between streaming distribution using unicast communication and buffering distribution using multicast communication.

16. An information providing method according to Claim 15, further comprising:
a streaming distribution step of performing streaming distribution using unicast communication; and
a buffering distribution step of starting buffering distribution using multicast communication in response to a switching signal for switching from streaming distribution using unicast communication to buffering distribution using multicast communication;
wherein, in order to perform buffering distribution using multicast communication which starts in response to the switching signal, buffering distribution starts with a first divisional file from among a plurality of divisional files created by dividing the desired streaming content into a plurality of blocks, the first divisional file becoming distributable so that the desired streaming content can be continuously played by the information receiving apparatus when unicast communication is switched to multicast communication.

17. An information providing method according to Claim 15, further comprising:
a buffering distribution step of performing buffering distribution using multicast communication; and
a streaming distribution step of switching from buffering distribution using multicast communication to streaming distribution using unicast communication in response to a switching signal for switching from buffering distribution using multicast communication to streaming distribution using unicast communication and performing streaming distribution using unicast communication;
wherein streaming distribution using unicast communication is performed subsequent to transmission of divisional files which are created by dividing the desired streaming content into a plurality of files and which are being distributed using buffering distribution at the time the switching signal is received.

18. An information providing apparatus for providing desired streaming content to an information receiving apparatus, comprising:
switching means for switching distribution of the desired streaming content between streaming distribution using unicast communication and buffering distribution using multicast communication.

19. An information providing apparatus according to Claim 18, further comprising:
streaming distribution means for performing streaming distribution using unicast communication; and
buffering distribution means for starting buffering distribution using multicast communication in response to a switching signal for switching from streaming distribution using unicast communication to buffering distribution using multicast communication;
wherein, in order to perform buffering distribution using multicast communication which starts in response to the switching signal, buffering distribution starts with a first divisional file from among a plurality of divisional files created by dividing the desired streaming content into a plurality of blocks, the first divisional file becoming distributable so that the desired streaming content can be continuously played by the information receiving apparatus when unicast communication is switched to multicast communication.

20. An information providing apparatus according to claim 18, further comprising:
buffering distribution means for performing buffering distribution using multicast communication; and
streaming distribution means for switching from buffering distribution using multicast communication to streaming distribution using unicast communication in response to a switching signal for switching from buffering distribution using multicast communication to streaming distribution using unicast communication and performing streaming distribution using unicast communication;
wherein streaming distribution using unicast communication is performed subsequent to transmission of divisional files which are created by dividing the desired streaming content into a plurality of files and which are being distributed using-buffering distribution at the time the switching signal is received.
